# EUROPEAN PATENT APPLICATION

(11) **EP 0 766 481 A2**
(43) Date of publication of application: **02.04.1997**
(21) Application number: 96306937.2
(22) Date of filing: 24.09.1996
(51) Int. Cl.: H04N 9/31

(54) **Projection display**

(30) Priority: 29.09.1995 JP 253165/95
(71) Applicant: MATSUSHITA ELECTRIC INDUSTRIAL CO., LTD., Kadoma-shi, Osaka-fu, 571 (JP)
(72) Inventor: Hosokawa, Tatsuhiro, Ibaraki-shi, Osaka, 567 (JP); Nakamura, Seiji, Sagamihara-shi, Kanagawa, 229 (JP); Kimoto, Takayuki, Hirakata-shi, Osaka 573 (JP)
(74) Representative: Crawford, Andrew Birkby

(57) **Abstract**

The invention provides novel means for lighting and controlling the light sources in a projection display having a plurality of light sources for emitting light containing colors of three primaries, and capable of selecting, lighting and controlling all or part of the light sources depending on the brightness of the ambient light of the display. Moreover, the cumulative lighting time of each one of the plurality of light sources is measured, and the data is accumulated and stored, and therefore lighting is controlled so that the cumulative lighting time of each light source may be almost uniform, or lighting is controlled by detecting presence or absence of trouble of each light source.

## Description

### BACKGROUND OF THE INVENTION

The present invention relates to a projection display for displaying an image of a light valve for modulating an output light from a light source on a screen.

Hitherto is known a liquid crystal projector using a transmission type liquid crystal panel as light valve as one of projection displays. In this liquid crystal projector, a single light source is used in many cases, but in the single light source, if the light source fails to light by some cause, nothing is displayed. Or if the power consumption is increased to elevate the brightness, the light emitting unit becomes large in size, the light focusing efficiency drops, and the brightness is not increased by the corresponding portion of increased power consumption.

In the front system, in particular, if desired to obtain a favorable image contrast in a bright ambient light, the luminance must be raised, and hence a bright light source is needed. Accordingly, as disclosed in Japanese Laid-open Patent Publication No. 6-265887, a liquid crystal projector comprising a plurality of light sources, capable of displaying a brighter image than before, has been proposed.

This liquid crystal projector using a plurality of light source, however, displays in a fixed brightness (luminance) regardless of the brightness of the ambient light, and in the environments of dark ambient light, the screen is brighter than adequate visually, and the light source lamp with a limited service life is not used effectively, and the power is spent more than necessary. Besides, an excessively bright screen may spoil the picture quality visually. In particular, for extending the service life of the light source lamp and saving power consumption, it has been demanded to solve these problems.

### SUMMARY OF THE INVENTION

It is hence an object of the invention to solve the above problems in the projection display having a plurality of light sources, and to present a projection display extended in the service life of light source and not consuming electric power more than necessary.

To achieve the object, a projection display of the invention comprises a plurality of light sources for emitting light containing light components of three primaries, a light valve for modulating an output light of the light sources by video information, and forming an optical image, and a projection lens for projecting the optical image from the light valve on a screen, wherein all of the light sources or a part of the light sources are selected and lit up.

When selecting and lighting only part of the light sources, the light sources are selected and lit up so as to average the cumulative lighting time of each light source.

By further comprising means for measuring the cumulative lighting time of each light source of the plurality of light sources, when selecting part of light sources and lighting up, the light source is selected and lit up in the sequence of the shorter cumulative lighting time.

By further comprising trouble detecting means in every light source of the plurality of light sources, when selecting part of light sources and lighting up, the light source is selected and lit up in the sequence of the shorter cumulative lighting time among the light sources except for the defective light source.

By further comprising means for detecting the brightness of the environments in which the display device is used, lighting of the plurality of light sources is controlled depending on the brightness of the environments of use.

The invention having such constitution is extended in the service life of the light sources used in the projection display, and by averaging the cumulative lighting time of each light source, replacement of light sources due to end of service life adjusted in timing. Moreover, when lighting part of the light sources, if there is any defective light source failing to light, other light sources can be used without problem, and the electric power is not consumed more than necessary, and hence the power consumption can be saved. Still more by detecting the brightness of the ambient light and controlling lighting of the light sources depending on the brightness, not only the power consumption is reduced in the dark ambient environments, but it is also effective to obtain display of visually suited brightness.

### BRIEF DESCRIPTION OF THE DRAWINGS

Fig. 1 is a block diagram of an embodiment according to the invention.

Fig. 2 is a block diagram of other embodiment according to the invention.

Fig. 3 is a block diagram of a different embodiment according to the invention.

### DESCRIPTION OF THE PREFERRED EMBODIMENTS

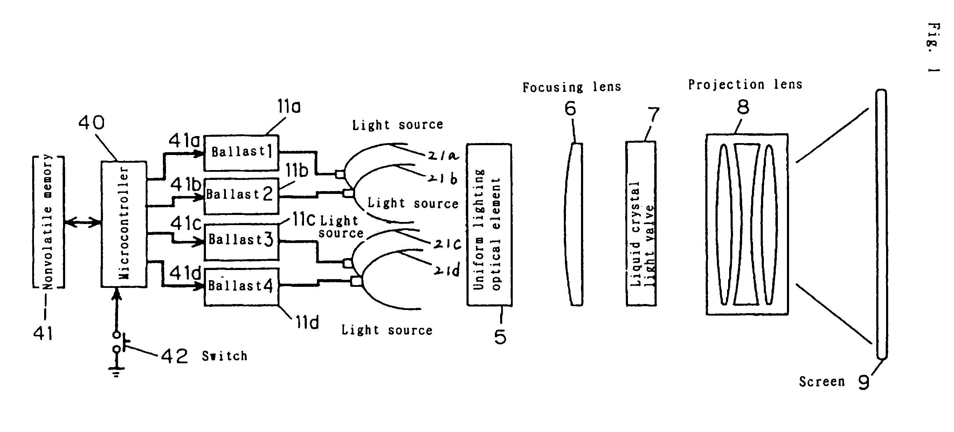

In an embodiment of the invention shown in Fig. 1, as light sources 21a, 21b, 21c and 21d, metal halide lamps, xenon lamps, halogen lamp, etc. are used. The light sources 21a, 21b, 21c, 21d are coupled with a microcontroller 40 through lighting control signal wires 41a, 41b, 41c, 41d for supplying lighting control signal from the microcontroller 40 and ballasts 11a, 11b, 11c, 11d for supplying stable electric power to the light sources. The lighting of each of light sources 21a, 21b, 21c, 21d is controled by the lighting control signal. The output lights from the light sources 21a, 21b, 21c, 21d are distributed in uniform luminance by a uniform lighting optical element 5 such as integrator, and illuminate a liquid crystal light valve 7 with color filter through a focusing lens 6. The liquid crystal light valve 7 controls the quantity of light transmission inevery pixel, and forms an image. The image formed by the liquid crystal light valve 7 is magnified and projected on a screen 9 by a projection lens 8.

A switch 42 is a switch for changing over the number of light sources to be lit up. When the switch 42 is set to light up all light sources, the control signal from the microcontroller 40 directs to light up all light sources 21a, 21b, 21c, 21d through the lighting control signal wires 41a, 41b, 41c, 41d.

On the other hand, in the case of using in a dark place, when the switch 42 is set to light up, for example, only two light sources, the microcontroller 40 sends a lighting signal to the lighting control signal wires 41a and 41b, and a turn-off signal is sent to the lighting control signal wires 41c and 41d, so that only the light sources 21a and 21b are lit. At this time, lighting of the light sources 21a and 21b is stored in a nonvolatile memory 41.

When the power source is turned on again, if the switch 42 is set to light up two light sources, first, the microcontroller 40 reads the information of the nonvolatile memory 41, and operates to light up the light sources 41c and 41d that were not lit previously. In this way, when the brightness is not so much needed in a dark place or the like, only some of the light sources are selected and lit up, and the service life of the light source is extended, while the power consumption is saved.

Moreover, in the embodiment shown in Fig. 1, if a timer is incorporated in the microcontroller 40, the lighting time can be measured when the light sources 21a, 21b, 21c, 21d are lighting. On the other hand, the nonvolatile memory 41 stores the past cumulative lighting time of the light sources 21a, 21b, 21c, 21d, and updates and stores the cumulative lighting time of each light source by adding the lighting time of the present lighting to the past cumulative lighting time in each light source. At this time, the lighting time of the present lighting is reset. In this constitution, when the switch 42 is set to light up two light sources, first, the cumulative lighting time data of the light sources 21a, 21b, 21c, 21d is read from the nonvolatile memory 41, and two light sources shorter in the cumulative lighting time are selected and lit up. In this way, the cumulative lighting time of all light sources is nearly unified and the life is uniform, and all light sources can be replaced at the same time, so that the serviceability is enhanced.

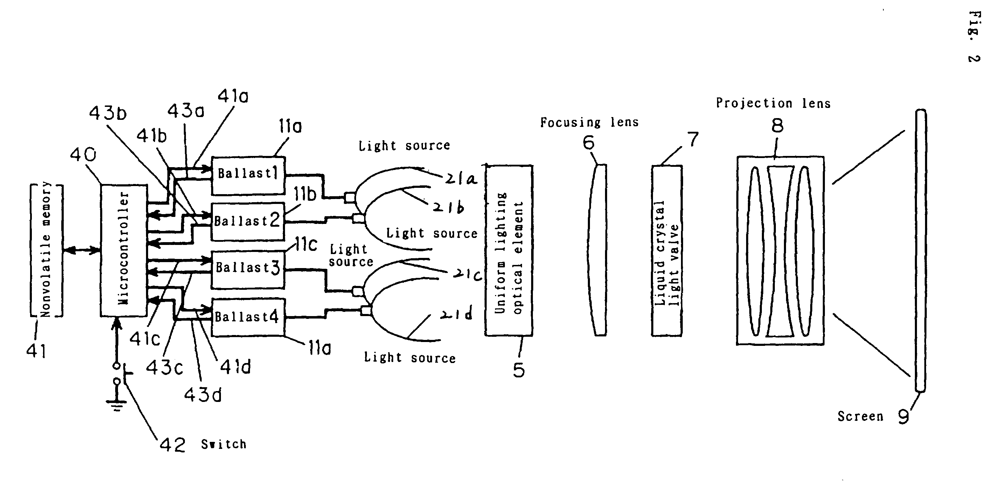

Fig. 2 is a block diagram showing other embodiment of the invention. In Fig. 2, the light sources 21a to 21d, ballasts 11a to 11d, microcontroller 40, nonvolatile memory 41, switch 42, uniform lighting optical element 5, focusing lens 6, liquid crystal light valve 7, projection lens 8, and screen 9 are same as in the embodiment shown in Fig. 1, and the description is omitted. What is different and modified from Fig. 1 is that lighting judging signal wires 43a, 43b, 43c, 43d for judging the lighting state of the light sources 21a, 21b, 21c, 21d are additionally connected from each light source to the microcontroller 40, so that the lighting state of each light source may be noticed to the microcontroller 40.

In the projection display of the invention as constituted in Fig. 2, same as in the embodiment in Fig. 1, when the switch 42 is set to light up two light sources, first, the microcontroller 40 reads out the data of cumulative lighting time of the light sources 21a, 21b, 21c, 21d from the nonvolatile memory 41, and selects and lights up two light sources shorter in the cumulative lighting time. At this time, the microcontroller 40 distinguishes the lighting state of the light sources to which the lighting signal is sent through the lighting judging signal wires 43a, 43b, 43c, 43d, and detects whether the light sources to be lit up is normal or defective. If a defective light source is detected, a lighting signal is sent to light up the light source shortest in the cumulative lighting time among the light sources to which turn-off signals have been sent. In this way, if there is a defective power source, two light sources can be lit up, and inconvenience in use can be prevented.

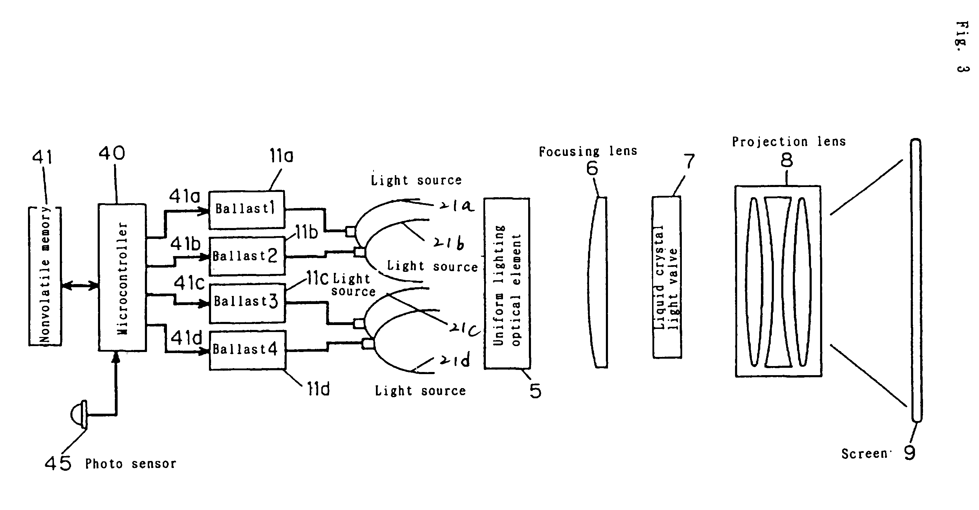

Fig. 3 is a block diagram showing a different embodiment. In Fig. 3, the light sources 21a to 21d, ballasts lla to lld, microcontroller 40, nonvolatile memory 41, uniform lighting optical element 5, focusing lens 6, liquid crystal light valve 7, projection lens 8, and screen 9 are same as in the embodiment shown in Fig. 1, and the description is omitted. What is different from Fig. 1 is that the switch 42 for changing over the number of lighting light sources is replaced by a photo sensor 45 for detecting the brightness of the ambient light of the environments in which the projection display is used.

In the projection display of the invention constituted as in Fig. 3, when the power source is turned on, first, the microcontroller 40 detects the brightness of the ambient light obtained from the photo sensor, and determines the number of lighting light sources depending on the brightness. When the microcontroller 40 judges, for example, to light up two light sources, same as in the foregoing embodiments, data of cumulative lighting time of the light sources 21a, 21b, 21c, 21d are read out from the nonvolatile memory 41, and the two light sources shorter in the cumulative lighting time are lit up. That is, the number of light sources is selected depending on the brightness of the ambient light, and an easy-to-see display is realized. Thus, if the ambient brightness varies or if the display is moved to a place of different brightness, an optimum number of light sources can be light up automatically.

Preferred embodiments of the projection display of the invention are described and illustrated in Fig. 1, Fig. 2 and Fig. 3. In these embodiments, the plurality of light sources are shown and explained as four light sources, but, needless to say, the number is not limited as far as plural light sources are used.

Similarly, when selecting and lighting part of the light sources among the plurality of light sources, two light sources are selected above, but the number is not limited to two.

Incidentally, the light sources 21a, 21b, 21c, 21d are individually controlled by the lighting control signal wires 41a, 41b, 41c, 41d, but, for example, two light sources may be assembled as one unit, and units may be controlled.

Of course, the invention may be applied to the projection display of either front type or rear type.

## Claims

1. A projection display comprising:
a plurality of light sources for emitting light containing light components of three primaries,
a light valve for modulating an output light of said plurality of light sources by video information, and forming an optical image,
a projection lens for projecting the optical image from said light valve on a screen, and
control means for selecting and lighting up at least a part of said plurality of light sources.

2. A projection display of claim 1, wherein said control means comprises switch means for setting the number of lighting said plurality of light sources, memory means for accumulating and storing data about lighting of each one of said plurality of light sources, and a microcontroller for generating a lighting control signal by referring to the data accumulated and stored in said memory means.

3. A projection display of claim 1, wherein said control means comprises light sensing means for detecting the brightness of the ambient light of the screen to be observed, and setting means for setting the number of lighting said plurality of light sources depending on the brightness of the ambient light detected by said light sensing means.

4. A projection display of claim 1, wherein said control means comprises means for measuring, accumulating and storing a cumulative lighting time of each one of said plurality of light sources, and means for selecting and lighting up in the sequence of shorter cumulative lighting time being accumulated and stored when selecting and lighting up a part of said plurality of light sources.

5. A projection display of claim 1, wherein said control means comprises trouble detecting means for detecting presence or absence of trouble in each of said plurality of light sources, and means for controlling the lighting of said plurality of light sources depending on the presence or absence of trouble.

6. A projection display of claim 1, wherein said control means comprises means for grouping said plurality of light sources in individual units of two or more each, and setting the number of selecting and lighting up light sources in units, when selecting and lighting up a part of said plurality of light sources.
